# EUROPÄISCHE PATENTSCHRIFT

(11) **EP 0 878 040 B1**
(45) Veröffentlichungstag und Bekanntmachung des Hinweises auf die Patenterteilung: **27.10.1999**
(21) Anmeldenummer: 97904994.7
(22) Anmeldetag: 20.01.1997
(51) Int. Cl.: H02B 13/065

(54) **METALLGEKAPSELTE SCHALTANLAGE**
METAL-ENCASED SWITCHGEAR
DISPOSITIF DE COMMUTATION BLINDE

(30) Priorität: 31.01.1996 DE 19603460
(43) Veröffentlichungstag der Anmeldung: 18.11.1998
(73) Patentinhaber: SIEMENS AKTIENGESELLSCHAFT, 80333 München (DE)
(72) Erfinder: BAUERSCHMIDT, Peter, D-91126 Schwabach (DE); BEIERL, Ottmar, D-91086 Aurachtal (DE); BULST, Wolf-Eckhart, D-81739 München (DE); MAGORI, Valentin, D-81539 München (DE); OSTERTAG, Thomas, D-85464 Finsing (DE); REINDL, Leonhard, D-83071 Stephanskirchen (DE); SCHOLL, Gerd, D-80636 München (DE); SCZESNY, Oliver, D-85609 Aschheim (DE); LORENZ, Dieter, D-12207 Berlin (DE)
(86) Internationale Anmeldenummer: DE9700094
(87) Internationale Veröffentlichungsnummer: WO9728591

(56) Entgegenhaltungen:
- CH-A- 668 510
- DE-A- 2 427 830
- DE-A- 4 116 281
- DE-U- 8 813 504
- DE-U- 9 420 199
- US-A- 4 685 018
- PATENT ABSTRACTS OF JAPAN vol. 15, no. 258 (E-1084), 28.Juni 1991 & JP 03 082316 A (TOSHIBA CORPORATION), 8.April 1991,

## Beschreibung

Die Erfindung betrifft eine metallgekapselte Schaltanlage mit einer drahtlosen Überwachungseinrichtung.

Aus dem Deutschen Gebrauchsmuster 94 20 199 ist eine metallgekapselte Hochspannungsschaltanlage bekannt, bei der in einem ihrer Gasräume als Sensor ein Oberflächenwellenelement (OFW) angeordnet ist. Das OFW dient zum Nachweis von Gasanteilen, die durch Lichtbogeneinwirkung auf das in der Kapselung enthaltene Löschgas entstehen, oder zur Detektion von Druckwellen. Dabei ist an der Außenseite der Kapselung eine Antenne angeordnet, die zur drahtlosen Informationsübertragung mit einer Auswerteeinrichtung dient.

Aus dem Aufsatz "Akustische Oberflächenwellen-Technologie für Innovationen" aus Siemens-Zeitschrift Spezial, FuE, Frühjahr 1994, ist prinzipiell die Anwendung von OFW-Sensoren in der Hochspannungstechnik bekannt. Dabei ist auch bereits vorgesehen, den OFW-Sensor in einem Behälter und die Antenne des Sensors außen zu befestigen.

In der nachveröffentlichten DE 195 14 342 ist die Verwendung von OFW-Sensoren bei einem Hochspannungskabel beschrieben. Die Antennen der Sensoren sind dort an Öffnungen im Innen- und Außenleiter des Kabels angeordnet.

Der Erfindung liegt die Aufgabe zugrunde, eine einfache Lösung für die Anordnung von Sende- und Empfangselementen zur Informationsübertragung an einer gekapselten Schaltanlage oder Rohrleitung anzugeben.

Diese Aufgabe wird erfindungsgemäß durch die Merkmale des Anspruchs 1 gelöst.

Diese Lösung ist besonders einfach und läßt sich bei neuen und bestehenden Anlagen problemlos integrieren. Die Anbringung der Sende- und Empfangsantenne erfolgt ohne zusätzliche Maßnahmen. Der Innenraum der Schaltanlage dient dabei als Übertragungsraum für die drahtlose Informationsübertragung. Störende Leitungen innerhalb der Kapselung oder elektromagnetische Einflüsse zwischen den Leitungen und dem Hoch- oder Mittelspannungsleiter sind vermieden. Durch die abschirmende Wirkung der Kapselung sind störende Fremdeinflüße auf die Informationsübertragung vermieden. Außerdem ist durch die abschirmende Wirkung die Störstrahlung für Fremdgeräte außerhalb der Kapselung gering gehalten.

Mit Vorteil ist die vorhandene Öffnung mit einem Verschlußelement versehen, so daß eine leichte Zugänglichkeit gegeben ist. Dabei ist das Verschlußelement bevorzugt als Deckel, Flansch oder Stützer ausgebildet. Es können also standardmäßig vorhandene Öffnungen, z.B. Kontrollöffnungen, Handlöcher oder Sichtfenster, zur Anbringung der Sende- und Empfangsantenne verwendet werden.

Das Verschlußelement bildet bevorzugt mit der Sende- und Empfangsantenne eine Baueinheit. Damit wird die Sende- und Empfangsantenne quasi integraler Bestandteil der Schaltanlage, wodurch die Montage sehr einfach ist.

Die Sende- und Empfangsantenne kann außerhalb der Kapselung an der Öffnung angebracht sein. Damit ist eine Zugänglichkeit der Sende- und Empfangsantenne von außen möglich, ohne daß die Kapselung geöffnet wird. Die Dichtigkeit der Kapselung wird hierdurch ebenfalls nicht verändert.

Dabei ist es günstig, wenn die Öffnung im Bereich der Sende- und Empfangsantenne auf der dem Innenraum der Kapselung zugewandten Seite einen dielektrischen Werkstoff aufweist. Dadurch ist eine gute, sichere und störungsfreie Datenübermittlung zwischen den beiden Antennen gegeben, wobei die drahtlose Informationsübertragung nur wenig beeinträchtigt ist.

Es ist dabei vorteilhaft, wenn der Werkstoff ein Quarzglas, Kunststoff oder ein sonstiger für Hochfrequenzwellen durchlässiger, elektrisch isolierender Werkstoff ist. Dadurch ist eine gute Funkübertragung zwischen den Antennen begünstigt. Für andere Übertragungsarten ist ein sinngemäß günstiger Werkstoff zu wählen (beispielsweise Glas für eine optische Übertragung).

Alternativ kann die Sende- und Empfangsantenne auch innerhalb der Kapselung an der Öffnung angebracht sein, wodurch eine besonders gute und verlustfreie Abstrahlung in den Innenraum der Kapselung gegeben ist. Mit Vorteil sind in diesem Fall an der Öffnung Durchführungsmittel für eine Energiezufuhr für die Sende- und Empfangsantenne vorgesehen. Bevorzugt sind die Durchführungsmittel dann in das Verschlußelement oder in einem Dichtungselement der Öffnung integriert. Somit sind keine zusätzlichen Baumaßnahmen oder Veränderungen an der Kapselung erforderlich.

Mit Vorteil kann die Sende- und Empfangsantenne als Schlitzantenne ausgebildet sein. Eine derartige Ausführung eignet sich besonders für den Einbau in die Metallkapselung, da die Geometrie angepaßt werden kann. Es kann dabei von einer sehr guten Einkopplung der Hochfrequenz auf das Innere der Kapselung ausgegangen werden, ohne daß Einbauten im Innenraum vorgesehen werden müssen.

Dabei kann zur Bildung des Schlitzes die Öffnung selbst oder eine Verbindungsstelle dienen. Es ist dabei beispielsweise möglich, eine Verbindungsstelle an einem Flanschrand als Schlitzantenne auszubilden. Auf diese Weise ist eine sehr gute Einkopplung der Sendewellen gegeben. Auch kann ein einfach in die Kapselung eingefräster Schlitz die Funktion der Antenne übernehmen. Dies ist sogar bei bestehenden Anlagen möglich. Der Schlitz wird anschließend mit einem geeigneten Dichtungsmittel ausgefüllt, so daß die Gasdichtigkeit der Kapselung gegeben ist.

Weitere Ausbildungen der Antenne, zum Beispiel als Kugel-, Stab- oder Dipolantenne sind selbstverständlich möglich. Hier gilt es, die optimalen Sende- und Empfangsbedingungen unter Berücksichtigung der in Mittel- und Hochspannungsanlagen gegebenen elektrischen Bedingungen zu erzielen. Die Antenne kann auch für Sende- und Empfangsrichtung geteilt ausgeführt sein.

Bevorzugt ist die Sende- und Empfangsantenne, gegebenenfalls unter Zwischenschaltung einer Sende- und Empfangseinrichtung, mit einer Steuer- und/oder Überwachungseinrichtung verbunden, so daß eine gute Überwachung und ein sicherer Betrieb der Anlage gegeben ist.

Es ist bei Ausbildung der Schaltanlage als Rohrleiter zur Energieübertragung auch denkbar, daß eine weitere Sende- und Empfangsantenne an einer weiteren Öffnung auf den Innenraum gerichtet ist, wobei zwischen beiden Antennen eine Informationsübertragung stattfindet. Der Innenraum der Kapselung dient dann als abgegrenzter Übertragungsraum.

Der Rohrleiter kann dabei durch Schottwände unterteilt sein wobei zumindest eine der Schottwände zwischen den Antennen angeordnet ist. Auf diese Weise ist eine geschützte Datenübertragung über lange Strecken möglich, ohne daß weitere Datenverbindungen verlegt sein müssen. Zusätzlich ist ein Datenaustausch mit Sensoren möglich.

Der/ie Sensor/en ist/sind bevorzugt als Oberflächenwellensensor/en (OFW) ausgebildet. Damit steht eine kostengünstige und technisch einfache Lösung zur Verfügung, wobei eine passive oder aktive Variante möglich ist. Die OFWs zeichnen sich darüber hinaus durch eine geringe Baugröße aus, wodurch sie problemlos innerhalb der Kapselung - auch unter Hochspannungsbedingungen - unterzubringen sind.

Die Informationsübertragung zwischen der Sende- und Empfangsantenne und der Antenne des Sensors kann per Ultraschall-, Infrarot- oder bevorzugt per Hochfrequenzübertragung erfolgen. Die Sende- und Empfangsantenne kann auch an oder in einem Stützer der Öffnung der Kapselung angeordnet sein, wodurch eine platzmäßig günstige Unterbringung gegeben ist.

Ein Ausführungsbeispiel, weitere Vorteile und Details der Erfindung werden nachfolgend anhand der Zeichnung näher erläutert. Es zeigen:
- FIG 1: eine Schaltanlage mit Sensoren in einem Längsschnitt und
- FIG 2 bis 6: Detailausführungen von Sende- und Empfangsantennen.

Zunächst wird allgemein eine Schaltanlage mit einer Überwachungseinrichtung erläutert, wobei eine Informationsübertragung mit Hochfrequenz verwendet wird. Es versteht sich von selbst, daß die beschriebene Überwachungseinrichtung auch für andere Funktionen innerhalb der Schaltanlage, z.B. zur Erfassung einer Schaltstellung ohne Sensoren nach einem Radarprinzip, für zusätzliche Steuerungsaufgaben oder rein zur Informationsübertragung, verwendbar ist.

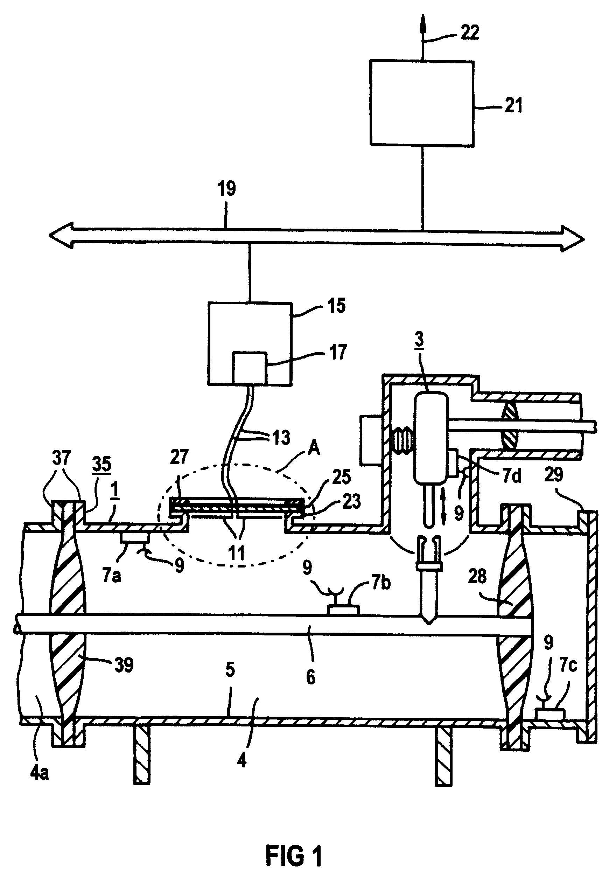

FIG 1 zeigt eine gekapselte, gasisolierte Schaltanlage 1, wie sie beispielsweise aus dem Stand der Technik gemäß dem obengenannten Deutschen Gebrauchsmuster 94 20 199 bekannt ist. Die Schaltanlage 1 ist für Hoch- oder Mittelspannung geeignet. Unter Schaltanlage wird hier auch ein gekapselter Rohrleiter ohne Schaltelement verstanden.

In diesem Längsschnitt durch einen Teil der Schaltanlage 1 ist ein Abzweig mit einem Schaltgerät 3, insbesondere einem Trenner oder einer Unterbrechereinheit, gezeigt. Zentral in der Kapselung 5 verläuft eine Stromschiene 6 als elektrischer Leiter. Zu näheren Details des Schaltgeräts 3 und dessen Funktion wird auf das obengenannte Gebrauchsmuster verwiesen.

Im Innenraum 4 der Kapselung 5 der Schaltanlage 1 sind als Sensoren Oberflächenwellensensoren (OFW) für verschiedenste Aufgaben, beispielsweise OFW 7a für eine Temperaturerfassung, OFW 7b für eine Stromerfassung, OFW 7c für eine Gaserkennung und OFW 7d für eine Stellungserkennung, angeordnet. Es sind dabei auch weitere OFWs für weitere Funktionen oder Aufgaben, z.B. Lichterkennung, Druckmessung usw., denkbar.

Jeder OFW weist als Empfangs- und Sendemittel zumindest eine Antenne 9 zur Informationsübertragung, insbesondere zur Abfrage, auf. Die Informationsübertragung erfolgt dabei von den OFWs 7a bis 7d zu einer zentralen, für alle OFWs 7a bis 7d wirksamen Sende- und Empfangsantenne, die nachfolgend als Antennenelement 11 bezeichnet ist.

Unter Antenne, Sende- und Empfangsantenne, Antennenelement oder Empfangs- und Sendemittel werden hier jegliche Strahlungs- und Empfangselemente verstanden, die eine Abstrahlung und/oder einen Empfang von elektromagnetischen oder optischen Wellen ermöglichen, beispielsweise Funkantennen, Ultraschall- oder optische Sende- und Empfangselemente (z. B. Infrarotelemente), wobei auch eine Aufteilung in Sende- und Empfangsrichtung umfaßt sein kann. Die Ausführung gemäß FIG 1 bezieht sich beispielhaft auf eine Funk-Informationsübertragung.

Das Antennenelement 11 ist über geeignete Leitungen 13, z.B. einem Koaxialkabel, gegebenenfalls unter Zwischenschaltung eines Anpaßgliedes, mit einer Steuer- und Überwachungseinrichtung (nachfolgend als Überwachungseinrichtung 15 bezeichnet) verbunden. Diese umfaßt ein Sende- und Empfangsteil 17 und eine weitere nicht näher gezeigte Einrichtung zur Signalauswertung, wobei gegebenenfalls ein Prozessor mit Speichereinrichtung umfaßt sein kann.

Das Sende- und Empfangsteil 17 oder zumindest Teile hiervon können prinzipiell auch dezentral bei dem Antennenelement 11 angeordnet sein, so daß zwischen der Überwachungseinrichtung 15 und dem Antennenelement 11 lediglich ein leistungsarmer Datenverkehr stattfindet. Die Sendeleistung wird dann dezentral erzeugt.

Es ist auch denkbar, daß das Antennenelement 11 mit einer dezentralen Einrichtung leitungsgebunden oder drahtlos direkt mit einem Bus 19 verbunden ist. Die Überwachungseinrichtung 15 kann mit dem Sende- und Empfangsteil 17 und dem angeschlossenen Antennenelement 11 im Sinne der vorliegenden Idee auch als Sendeempfangseinrichtung oder Transceiver bezeichnet werden.

Die Überwachungseinrichtung 15 kann beispielsweise eine zentrale Einheit in einer Schaltanlage oder auch eine abzweig- oder gerätebezogene Einrichtung sein, die über eine weitere Datenverbindung, z.B. über den Bus 19 mit einer übergeordneten Zentrale 21 datentechnisch in Verbindung steht. Diese Zentrale 21 kann eine Nahsteuerzentrale sein, welche wiederum über eine geeignete Schnittstelle 22 mit einer übergeordneten Netzleitstelle in Verbindung steht.

Selbstverständlich umfaßt zumindest die Zentrale 21 geeignete Bedien- und Anzeigemittel, z.B. eine Tastatur und einen Bildschirm, für den Betrieb der Schaltanlage 1. Über geeignete nicht näher gezeigte Schnittstellen ist auch ein portables Gerät, z.B. ein tragbarer Computer oder ein Laptop, zur Bedienung oder für sonstige Ein- und Ausgaben an verschiedenste Stellen des in der Figur 1 gezeigten Systems, z.B. am Bus 19 oder an der Steuereinrichtung 15, anschließbar.

Die gezeigten Datenverbindungen können beliebig, z. B. als leitungsgebundene Verbindung, insbesondere Drahtleitung oder Lichtleiter, oder drahtlose Verbindung, z.B. Funk-, Schall- oder optische Verbindung, ausgeführt sein.

Im vorliegenden Beispiel ist das Antennenelement 11 innerhalb der Kapselung 5 an einer Öffnung angeordnet. Die Öffnung ist dabei von einem Flansch 23 gebildet, der mit einem Verschlußelement 25, z.B. einem Deckel und einem Druckring 27, verschlossen ist. Selbstverständlich sind hier nicht näher gezeigte Verschraubungen für die Flanschverbindung nach dem Stand der Technik vorzusehen.

Das Antennenelement 11 liegt somit innerhalb der Kapselung 5, so daß beste Bedingungen für eine problemlose Informationsübertragung zu den OFWs 7a bis 7d gegeben ist. Da das Antennenelement 11 quasi innerhalb eines Stutzens liegt und nicht in den Innenraum 4 hineinragt, sind hier elektrische oder feldtechnische Probleme vermieden. Außerdem bildet das Antennenelement 11 mit einem ohnehin von der Kapselung 5 lösbaren Bauteil eine Baueinheit, so daß es einfach zugänglich oder auch nachrüstbar ist.

Die OFWs 7a bis 7d sind dabei zum Teil an der Kapselung 5, zum Teil an der Stromschiene 6, auf einem beweglichen Teil des Schaltgeräts 3 oder auch an oder hinter einem ersten Stützer 28, gegebenenfalls in einem getrennten Gasraum, angeordnet. Gegebenenfalls können mehrere Sensoren für unterschiedliche Funktionen gesammelt an einem Ort angeordnet sein und eine gemeinsame Antenne aufweisen. Es ist auch möglich , daß ein Sensor mehrere Meßfunktionen beinhaltet. Vorteilhafterweise können die Sensoren nach Art und Größe einer Scheckkarte ausgebildet sein, wobei der wesentliche Teil der Karte die Antenne bildet.

Wesentlich für die Funktion der gesamten Überwachung ist, daß eine sichere Funk- oder Datenverbindung innerhalb der Kapselung 5 besteht. Dazu ist der Stützer 28 aus einem dielektrischen Material gefertigt, so daß die Hochfrequenzübertragung auch zwischen dem Antennenelement 11 und dem hinter dem Stützer 28 liegenden OFW 7c nicht beeinträchtigt ist. Bei anderen Übertragungsmethoden ist das Material des Stützers entsprechend vorzusehen (z.B. Glas bei einer optischen Übertragung).

Der Flansch 23 oder die benötigte Öffnung zur Einkopplung kann beispielsweise Teil einer vorhandenen Wartungsöffnung, eines Gasbefüllungsstutzens, einer Gießharzeinfüllöffnung, eines Schaulochs oder auch eines Endflansches sein. Sinngemäß sind daher die hier beispielhaft beschriebenen Ausführungen für jegliche mögliche Öffnungen an Schaltanlagen, beispielsweise auch für den gezeigten Endflansch 29, anwendbar. Es kann auch eine speziell angebrachte Öffnung verwendet werden.

Es ist auch denkbar, daß das Antennenelement 11 außerhalb der Kapselung 5 angeordnet ist und über ein dielektrisches Fenster in den Innenraum 4 strahlt. Hierzu bietet sich beispielsweise als Öffnung ein Einfüllstutzen im Bereich eines Verbindungsflansches zweier Kapselungsabschnitte an, wobei das Antennenelement gegebenenfalls als Stabantenne ausgebildet in die Öffnung eingegossen ist.

Bei Anordnung einer weiteren nicht näher gezeigten Antenne mit einer zugeordneten Steuereinrichtung im Gasraum hinter dem weiteren Stützer 39 ist auch eine Verwendung des Innenraumes 4 der Kapselung 5 als Übertragungsraum möglich, wobei eine geschützte Datenübertragung über lange Strecken möglich ist. Diese Möglichkeit ist bevorzugt bei Rohrleitern einsetzbar. Eine Kombination mit einer gleichzeitigen Sensorabfrage ist denkbar.

Nachfolgend werden beispielhafte Ausgestaltungen für das Detail A in FIG 1 näher erläutert.

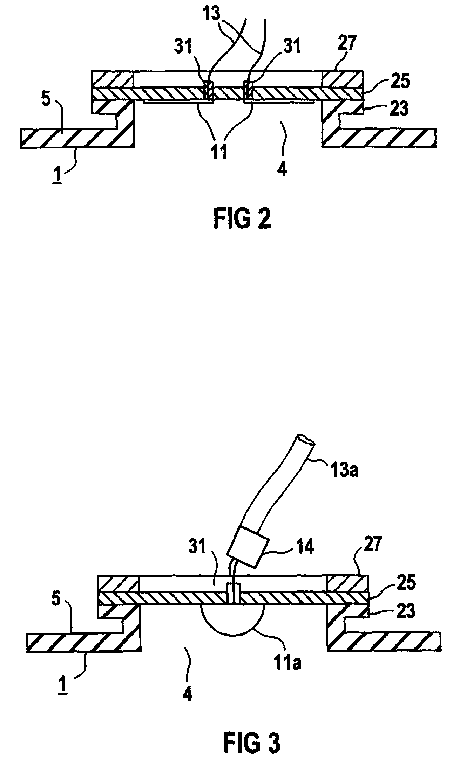

FIG 2 zeigt eine erste mögliche Ausführung des Details A entsprechend der Ausführung in FIG 1. Dabei ist das Antennenelement 11 auf der dem Innenraum 4 der Kapselung 5 zugewandten Seite des Verschlußelements 25 angeordnet. Das Material des Verschlußelements 25 kann dabei metallisch oder auch nichtmetallisch sein.

Das Antennenelement 11 kann beispielsweise mit Abstandselementen in einem vorgegebenen Abstand auf dem Verschlußelement 25 befestigt oder - wie gezeigt - direkt auf diesem angeordnet sein. Bei direkter, gegebenenfalls isolierter Anordnung ist eine Anbringung z.B. durch Kleben denkbar.

Es ist auch denkbar, daß bei Ausbildung des Verschlußelements 25 aus einem nichtleitenden Material das Antennenelement 11 aufgedampft oder direkt mit dem Verschlußelement 25 nach Art einer Kupferkaschierung aufgebracht ist. Dabei kann beispielsweise die nach außen gerichtete Seite des Verschlußelements 25 ebenfalls metallisiert sein, so daß nach außen eine abschirmende Wirkung gegeben ist.

Die Leitungen 13 sind galvanisch mit dem Antennenelement 11 verbunden, wozu das Verschlußelement 25 geeignete Durchführungsmittel 31, insbesondere Hochfrequenzdurchführungen, aufweist. Die Durchführungsmittel 31 können gegebenenfalls auch im Randbereich des Flansches 23 vorgesehen sein, so daß eine seitliche Herausführung oder ein seitlicher Anschluß der Leitungen 13 an das Antennenelement 11 gegeben ist. Denkbar ist hier auch eine induktive Übertragung der Sende- und Empfangsenergie von den Leitungen 13 zu dem Antennenelement 11 mittels eines Kopplers.

Sinngemäß ist es auch selbstverständlich möglich, das Antennenelement 11 in das Verschlußelement 25 oder auf dessen Außenseite anzuordnen. Im ersten Fall kann das Antennenelement 11 gegebenenfalls in das Verschlußelement 25 eingegossen sein oder -bei einer Sandwichbauweise- im Verschlußelement 25 eingelegt sein. Die Anbringung des Antennenelements 11 an der Außenseite erfolgt sinngemäß zur inneren Anbringung. Dabei ist von Vorteil, daß keine gasdichte Durchführung benötigt wird.

Wesentlich für diese Ausführungsformen ist jedoch, daß das Verschlußelement 25 zumindest im Bereich zwischen dem Antennenelement 11 und dem Innenraum 4 aus einem dielektrischen Werkstoff gefertigt ist, der die Sende- und Empfangsleistung ungehindert passieren läßt. Geeignete Werkstoffe hierfür sind z.B. Quarzglas oder Kunststoff.

Bei den gezeigten Ausführungsformen wurde bisher noch nicht näher auf die Formgebung des Antennenelements 11 eingegangen. Diese könnte in den bisher beschriebenen Ausführungen beispielsweise als einfacher Dipol, in gestreckter oder gebogener Ausführung, z.B. als Stabantenne, oder sonstigen geeigneten Formen gemäß dem Stand der Technik ausgeführt sein.

FIG 3 zeigt eine Ausführung, bei der die Sende- und Empfangsantenne 11a als Kugelantenne ausgebildet ist, wobei beispielhaft eine Halbkugel zur Anwendung kommt. Diese Ausführungsform ist bezüglich der Feldstärkeverteilung besonders günstig, da Feldstärkeerhöhungen vermieden sind. Überschlage oder sonstige Störungen sind daher verhindert. Die gezeigte Kugelantenne ist unter Zwischenschaltung eines Antennenanpaßgliedes 14, das auch aktiv sein kann, an ein Koaxialkabel 13a angeschlossen.

Eine weitere Möglichkeit für eine Ausbildung der Sende- und Empfangsantenne ist eine Ausführung als Schlitzantenne. Allgemein dient bei einem Schlitzstrahler eine in einer leitenden Fläche befindliche Ausnehmung, insbesondere ein Schlitz, als Antenne. Bevorzugt hat der Schlitz eine Länge von λ/2.

Details zum Schlitzstrahler sind beispielsweise dem Fachbuch "Signalübertragung", Verlaa Viehweg, Verfasser Harald Schumny, Seiten 276 ff., zu entnehmen. Ein derartiger Schlitzstrahler läßt sich in einer Schaltanlage auf vielfältigste Art und Weise realisieren.

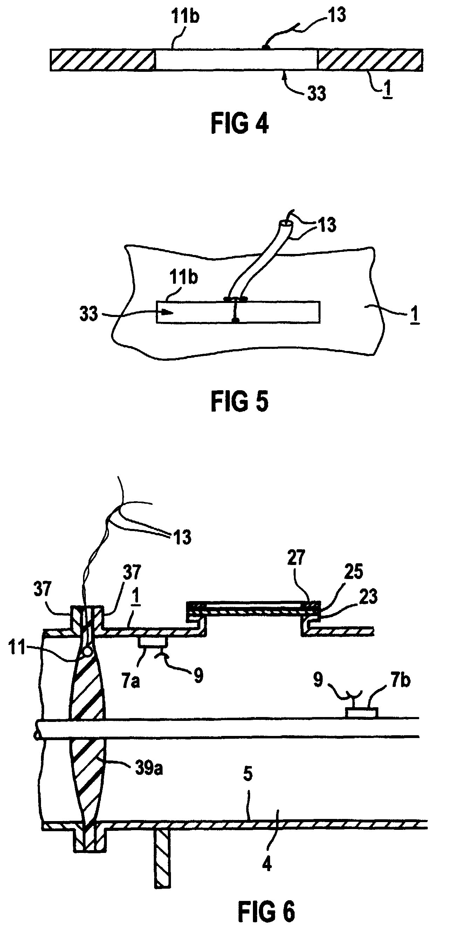

FIG 4 und FIG 5 zeigen im Längsschnitt bzw. in der Draufsicht einen Ausschnitt aus der Wandung der Kapselung 5, in die ein Schlitz 33 eingearbeitet ist. Dieser kann beispielsweise eingefräst sein. Der Schlitz 33 bildet dabei selber eine an der Kapselung 5 angeordnete Öffnung. Das dadurch gebildete Antennenelement 11b ist somit integraler Bestandteil der Kapselung 5.

Der Schlitz 33 hat bevorzugt eine Länge von einem ganzzahligen Vielfachen der abgestrahlten Wellenlänge λ/2. Der Anschluß der Leitungen 13 erfolgt dabei - wie in FIG 5 prinzipiell mit einem Koaxialleiter gezeigt - zu beiden Längsseiten des Schlitzes 33.

Der Schlitz 33 kann dabei beliebige Formen, z.B. eine Längsform, eine Bogen- oder Kreisform, insbesondere Formen wie im obengenannten Fachbuch beschriebenen, haben. Ein derartiger Schlitzstrahler läßt sich in der Kapselung 5 einer Schaltanlage 1 günstig unterbringen. Er kann beispielsweise auch in ein bereits oben beschriebenes Verschlußelement an einer Öffnung integriert werden. Es ist selbstverständlich, daß der Schlitz 33 mit einem gasdichten Dichtungsmittel ausgefüllt sein muß, das gleichzeitig die Abstrahlung und den Empfang von Wellen nicht beeinträchtigt.

Im einfachsten Fall ist es denkbar, daß der Schlitzstrahler von einem ohnehin in der Kapselung 5 vorhandenen Schlitz gebildet wird. Geeignete Schlitze ergeben sich beispielsweise an Verbindungsstellen, z.B. Verschraubungen oder Flanschen. In FIG 1 würde sich hierzu beispielsweise der zwischen dem Flansch 23 und dem Verschlußelement 25 oder dem Druckring 27 ergebende Schlitz eignen. Gegebenenfalls muß an einer derartigen Verbindungsstelle noch ein Abstandselement zur Bemessung der Schlitzbreite und gegebenenfalls ein als offener metallischer Ring ausgebildetes Zwischenelement zur Bemessung der Schlitzlänge vorgesehen sein.

Eine weitere geeignete Stelle zur Anbringung eines Antennenelements wäre beispielsweise auch der Verbindungsflansch 35 (FIG 1), der zwei Rohrabschnitte miteinander verbindet. Die hierbei als Schlitz dienende Öffnung liegt dabei zwischen den beiden Flanschenden 37 und ist von einem Stützer 39 ausgefüllt. Gegebenenfalls kann auch eine dort in der Regel befindliche Gießharzbefüllungsöffnung verwendet werden.

Der Stützer selbst der Schaltanlage 1 bietet eine weitere Möglichkeit für die Unterbringung der Sende- und Empfangsantenne. FIG 6 zeigt einen Schnitt durch die Kapselung 5 einer Schaltanlage 1 im Bereich eines weiteren Stützers 39a. Der weitere Stützer 39a ist im Bereich einer Öffnung zwischen den beiden Flanschenden 37 in der Kapselung 1 angeordnet. Das Antennenelement 11 ist im Inneren des Stützers 39a angeordnet. Die Leitungen 13 sind im Bereich der Flanschenden 37 herausgeführt.

Das Antennenelement 11 kann dabei beliebige geeignete Formen, z.B. eine Dipolform, aufweisen. Bevorzugt hat es seine Lage im Randbereich an der Wandung der Kapselung 5 an der von den Flanschenden 37 gebildeten Öffnung, so daß eine elektromagnetische Störung des elektrischen Feldes, insbesondere der Feldverteilung, zwischen der Kapselung 5 und dem Innenleiter 6 vermieden ist. Da in diesem Bereich der Stützer 39a auch besonders dünn ausgeführt ist, ist auch eine gegebenenfalls vorhandene dämpfende Wirkung des Stützerwerkstoffes gering gehalten. Das Antennenelement 11 kann selbstverständlich auch auf eine Außenfläche des Stützers 39a nach den bereits oben beschriebenen Methoden angeordnet sein.

Selbstverständlich sind die obengenannten einzelnen Merkmale und Ausführungen der vorliegenden neuen Idee im Rahmen des fachmännischen Handels miteinander oder mit Merkmalen aus dem Stand der Technik kombinierbar, ohne daß der Grundgedanke der Idee verlassen wird. Für die vorliegende Idee ist wesentlich, daß der Innenraum der Schaltanlage zur Informationsübertragung verwendet wird.

## Patentansprüche

1. Metallgekapselte Schaltanlage (1) für Hoch- oder Mittelspannung, mit zumindest einem im Innenraum (4) der Kapselung (5) angeordneten Sensor (7a bis 7d), der eine Antenne (9) hat, wobei eine Sende- und Empfangsantenne (11 bis 11b) zum drahtlosen Informationsaustausch mit der Antenne (8) des Sensors (7a bis 7d) vorgesehen ist, wobei die Kapselung (5) eine Öffnung aufweist, die mit einem Verschlußelement (25) verschlossen ist, und wobei die Sende- und Empfangsantenne (11 bis 11c) an dem Verschlußelement (25) angeordnet und auf den Innenraum (4) gerichtet ist. (FIG 1)

2. Metallgekapselte Schaltanlage nach Anspruch 1, wobei das Verschlußelement (25) als Deckel, Flansch oder Stützer ausgebildet ist.

3. Metallgekapselte Schaltanlage nach einem der Ansprüche 1 oder 2, wobei das Verschlußelement (25) mit der Sende- und Empfangsantenne (11 bis 11b) eine Baueinheit bildet.

4. Metallgekapselte Schaltanlage nach einem der Ansprüche 1 bis 3, wobei die Sende- und Empfangsantenne (11 bis 11b) außerhalb der Kapselung (5) an der Öffnung angebracht ist.

5. Metallgekapselte Schaltanlage nach einem der Ansprüche 1 bis 4, wobei die Öffnung zumindest im Bereich der Sende- und Empfangsantenne (11 bis 11b) auf der dem Innenraum (4) zugewandten Seite einen dielektrischen Werkstoff aufweist.

6. Metallgekapselte Schaltanlage nach Anspruch 5, wobei der Werkstoff ein Quarzglas, Kunststoff oder ein sonstiger für Hochfrequenzwellen durchlässiger, elektrisch isolierender Werkstoff ist.

7. Metallgekapselte Schaltanlage nach einem der Ansprüche 1 bis 3, wobei die Sende- und Empfangsantenne (11 bis 11b) innerhalb der Kapselung (5) angeordnet ist.

8. Metallgekapselte Schaltanlage nach Anspruch 7, wobei an der Öffnung Durchführungsmittel (31) für eine Energiezufuhr zur Sende- und Empfangsantenne (11 bis 11b) vorgesehen sind.

9. Metallgekapselte Schaltanlage nach einem der Ansprüche 1 bis 8, wobei die Sende- und Empfangsantenne (11 bis 11b) als Schlitzantenne ausgebildet ist. (FIG 4 und 5)

10. Metallgekapselte Schaltanlage nach Anspruch 9, wobei zur Bildung des Schlitzes (33) für die Schlitzantenne die Öffnung oder eine Verbindungsstelle der Kapselung (5) dient.

11. Metallgekapselte Schaltanlage nach einem der Ansprüche 1 bis 10, wobei die Sende- und Empfangsantenne (11 bis 11b) mit einer Steuereinrichtung (15) verbunden ist.

12. Metallgekapselte Schaltanlage nach einem der Ansprüche 1 bis 11, wobei der oder die Sensoren als Oberflächenwellensensor/en (7a bis 7d) ausgebildet ist/sind.

13. Metallgekapselte Schaltanlage nach einem der Ansprüche 1 bis 8, wobei die Informationsübertragung zwischen der Sende- und Empfangsantenne (11 bis 11c) und der Antenne (9) des Sensors per Ultraschall-, Infrarot- oder Hochfrequenzübertragung erfolgt.

14. Metallgekapselte Schaltanlage nach einem der Ansprüche 1 bis 8, wobei die Sende- und Empfangsantenne (11 bis 11c) in einem Stützer (39a) der Kapselung (5) angeordnet ist. (FIG 6)

## Claims

1. Metal-encapsulated switching installation (1) for high or medium voltage, having at least one sensor (7a to 7d) which is arranged in the interior (4) of the encapsulation (5) and has an antenna (9), a transmitting and receiving antenna (11 to 11b) being provided for wire-free information interchange with the antenna (8) of the sensor (7a to 7d), the encapsulation (5) having an opening which is closed by a closure element (25), and the transmitting and receiving antenna (11 to 11c) being arranged on the closure element (25) and being directed towards the interior (4). (FIG 1)

2. Metal-encapsulated switching installation according to Claim 1, the closure element (25) being designed as a cover, flange or insulated support.

3. Metal-encapsulated switching installation according to one of Claims 1 or 2, the closure element (25) forming a unit with the transmitting and receiving antenna (11 to 11b).

4. Metal-encapsulated switching installation according to one of Claims 1 to 3, the transmitting and receiving antenna (11 to 11b) being fitted outside the encapsulation (5) on the opening.

5. Metal-encapsulated switching installation according to one of Claims 1 to 4, the opening having a dielectric material at least in the region of the transmitting and receiving antenna (11 to 11b), on the side facing the interior (4).

6. Metal-encapsulated switching installation according to Claim 5, the material being a quartz glass, plastic or any other electrically insulating material through which radio-frequency waves can pass.

7. Metal-encapsulated switching installation according to one of Claims 1 to 3, the transmitting and receiving antenna (11 to 11b) being arranged inside the encapsulation (5).

8. Metal-encapsulated switching installation according to Claim 7, glands (31) being provided on the opening, in order to supply power to the transmitting and receiving antenna (11 to 11b).

9. Metal-encapsulated switching installation according to one of Claims 1 to 8, the transmitting and receiving antenna (11 to 11b) being designed as a slot antenna. (FIGS 4 and 5)

10. Metal-encapsulated switching installation according to Claim 9, the opening or a connection point of the encapsulation (5) being used to form the slot (33) for the slot antenna.

11. Metal-encapsulated switching installation according to one of Claims 1 to 10, the transmitting and receiving antenna (11 to 11b) being connected to a control device (15).

12. Metal-encapsulated switching installation according to one of Claims 1 to 11, the sensor or sensors being designed as a surface acoustic wave sensor or sensors (7a to 7d).

13. Metal-encapsulated switching installation according to one of Claims 1 to 8, the information transmission between the transmitting and receiving antenna (11 to 11c) and the antenna (9) of the sensor taking place by means of ultrasound, infrared or radiofrequency transmission.

14. Metal-encapsulated switching installation according to one of Claims 1 to 8, the transmitting and receiving antenna (11 to 11c) being arranged in an insulated support (39a) of the encapsulation (5). (FIG 6)

## Revendications

1. Installation de distribution (1) à blindage métallique pour haute ou moyenne tension, comportant au moins un capteur (7a à 7d) qui est monté dans l'espace intérieur (4) du blindage (5) et qui a une antenne (9), dans laquelle une antenne d'émission et de réception (11 à 11b) est prévue pour l'échange d'informations sans fil avec l'antenne (9) du capteur (7a à 7d), le blindage (5) comporte une ouverture qui est fermée par un élément d'obturation (25) et l'antenne d'émission et de réception (11 à 11c) est montée sur l'élément d'obturation (25) et est orientée sur l'espace intérieur (4). (Figure 1)

2. Installation de distribution à blindage métallique selon la revendication 1, dans laquelle l'élément d'obturation (25) est conçu sous forme de couvercle, de bride ou d'isolateur support.

3. Installation de distribution à blindage métallique selon l'une des revendications 1 ou 2, dans laquelle l'élément d'obturation (25) forme avec l'antenne d'émission et de réception (11 à 11b) une unité modulaire.

4. Installation de distribution à blindage métallique selon l'une des revendications 1 à 3, dans laquelle l'antenne d'émission et de réception (11 à 11b) est montée à l'extérieur du blindage (5) sur l'ouverture.

5. Installation de distribution à blindage métallique selon l'une des revendications 1 à 4, dans laquelle l'ouverture comporte un matériau diélectrique au moins dans la zone de l'antenne d'émission et de réception (11 à 11b) sur le côté proche de l'espace intérieur (4).

6. Installation de distribution à blindage métallique selon la revendication 5, dans laquelle le matériau est un verre quartzeux, une matière plastique ou un autre matériau isolant électrique et transparent aux ondes haute fréquence.

7. Installation de distribution à blindage métallique selon l'une des revendications 1 à 3, dans laquelle l'antenne d'émission et de réception (11 à 11b) est montée à l'intérieur du blindage (5).

8. Installation de distribution à blindage métallique selon la revendication 7, dans laquelle il est prévu au niveau de l'ouverture des moyens de traversée (31) pour une amenée d'énergie destinée à l'antenne d'émission et de réception (11 à 11b).

9. Installation de distribution à blindage métallique selon l'une des revendications 1 à 8, dans laquelle l'antenne d'émission et de réception (11 à 11b) est conçue comme une antenne fendue. (Figures 4 et 5)

10. Installation de distribution à blindage métallique selon la revendication 9, dans laquelle l'ouverture ou un point de jonction du blindage (5) sert à former la fente (33) pour l'antenne fendue.

11. Installation de distribution à blindage métallique selon l'une des revendications 1 à 10, dans laquelle l'antenne d'émission et de réception (11 à 11b) est reliée à un dispositif de commande (15).

12. Installation de distribution à blindage métallique selon l'une des revendications 1 à 11, dans laquelle le ou les capteurs sont conçus comme des capteurs d'ondes de surface (7a à 7d).

13. Installation de distribution à blindage métallique selon l'une des revendications 1 à 8, dans laquelle la transmission d'informations entre l'antenne d'émission et de réception (11 à 11c) et l'antenne (9) du capteur s'effectue par ultrasons, par infrarouges ou par haute fréquence.

14. Installation de distribution à blindage métallique selon l'une des revendications 1 à 8, dans laquelle l'antenne d'émission et de réception (11 à 11c) est montée dans un isolateur support (39a) du blindage (5). (Figure 6)
